# EUROPEAN PATENT SPECIFICATION

(11) **EP 0 994 467 B1**
(45) Date of publication and mention of the grant of the patent: **27.08.2003**
(21) Application number: 99308046.4
(22) Date of filing: 12.10.1999
(51) Int. Cl.: G11B 21/08, G11B 21/12, G11B 5/55, G11B 7/085

(54) **Head control unit in a disk apparatus**
Abtastkopfkontrolleinheit in einem Plattenlaufwerk
Unité de commande de la tête dans un appareil à disque

(30) Priority: 14.10.1998 JP 29184398
(43) Date of publication of application: 19.04.2000
(73) Proprietor: SONY CORPORATION, Tokyo 141 (JP)
(72) Inventor: Wakuda, Hiroshi, c/o Sony Corporation, Tokyo (JP); Mitani, Akira, c/o Sony Corporation, Tokyo (JP)
(74) Representative: Robinson, Nigel Alexander Julian

(56) References cited:
- EP-A- 0 657 877
- US-A- 5 087 997
- US-A- 5 357 384
- US-A- 5 610 885

## Description

The present invention relates to disk apparatuses in which a floppy disk (FD) is loaded, and more particularly, to head control units which seek to prevent a track number from being erroneously counted when a head traverses tracks in a seek operation.

In a conventional floppy-disk drive apparatus, a step driving mechanism employing a stepper motor is used as a head feed unit for moving a head to a track where recording is to be performed concentrically on a recording plane of a disk. With a mechanical step operation of this head feed unit, the head is positioned at the track.

In the step driving mechanism, a screw shaft driven by the stepper motor is engaged with a head base and the head is fed by the rotation of the screw shaft. Since the mechanical connection determines the relationship between the rotation of the stepper motor and the movement position of the head, the head is moved to the target track just by driving the stepper motor according to seek instruction pulses sent from the host computer.

On the other hand, a head feed unit having a linear-motor (voice-coil motor: VCM) drive is provided for some disk apparatuses in which the same floppy disk is loaded. In a linear-motor driving section, however, since the position of a head base cannot be mechanically determined, a head-position detection unit for always detecting the movement position of the head and a position control unit need to be provided.

The head feed unit having the linear-motor drive is, for example, included in a disk apparatus in which a high-density-recording disk on which a servo signal is recorded for tracking and a floppy disk (FD) having a capacity of 2 megabytes (MB) can be loaded. The high-density disk to be loaded into this type of a disk apparatus is also a flexible disk. In the following description, a flexible disk having a capacity of 2 MB is called a floppy disk and it is discriminated from the high-density disk.

When the high-density disk is loaded, the head is moved by the linear-motor drive. When the head reads the servo signal, it is determined that the head has been positioned at a track. On the other hand, when a floppy disk is loaded, the head feed position is controlled according to the detection output of the head-position detection unit and the head is positioned at the track.

In these disk apparatuses in which a floppy disk is loaded, when seek pulses are given from the host computer, for example, at an interval of 3 to 12 ms, the head is moved track by track in a step manner. In disk apparatuses employing the step driving mechanism, since the head base is mechanically moved with the use of the stepper motor and the screw shaft, a good movement tracking capability of the head is provided against seek pulses, and the head is positively moved by one track against one seek pulse.

The host computer requests this type of disk apparatuses to send back an acknowledge signal indicating that the head has been moved to a zero position when the head has been moved to the track having a track number of zero after seek pulses are given. Since the step driving . mechanism has a good head tracking capability against seek pulses and the head is immediately moved back to the zero position, a reference-position detection unit detects this return and an acknowledge pulse can be promptly sent to the host computer according to the detection output of the reference-position detection unit. It is generally specified that the acknowledge pulse should be sent within several milliseconds after a seek pulse for moving the head to the track having a track number of zero is given. Also in the disk apparatus in which both high-density-recording disk and floppy disk can be loaded, it is required that the apparatus be controlled in the same way as for other floppy-disk drive apparatuses when a floppy disk is loaded. Since this disk apparatus is provided with the head feed unit having the linear-motor (VCM) drive, a response time from when a seek pulse is given and a current flows in the coil to when the head is actually moved is long, and the head movement is delayed against the seek pulse.

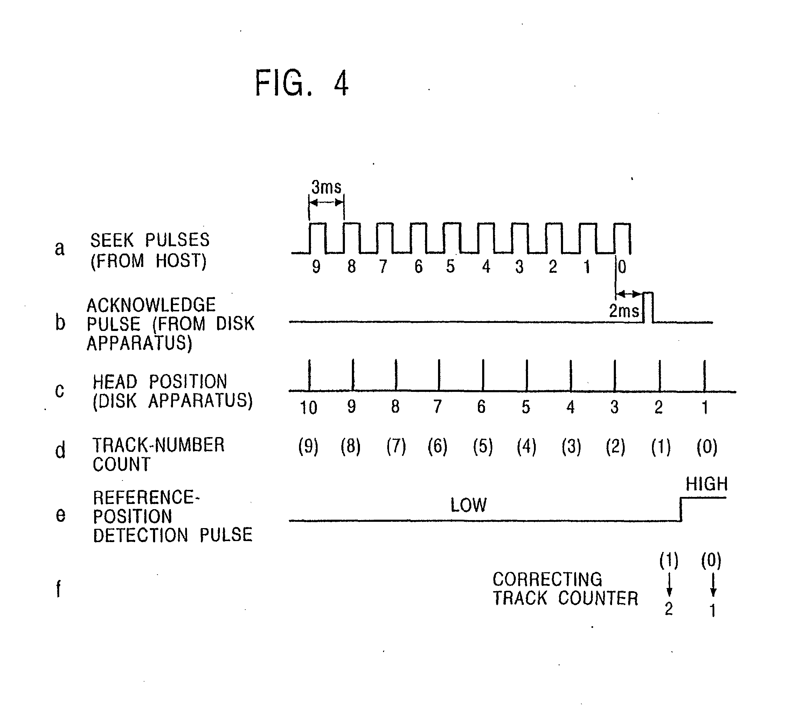

Fig. 4(a) shows seek pulses which the host computer sends to a disk apparatus, for example, in a case in which the host computer determines that the head is positioned at the track having a track number of 10 and the head is to be returned to the track having a track number of zero. In this case, the host computer sends, for example, 10 seek pulses at an interval of 3 ms to the disk apparatus.

Fig. 4(c) indicates head movement positions, and Fig. 4(d) shows the numbers of tracks. As shown in Fig. 4(c), in a seek operation by the use of the linear-motor driving section, the head movement is delayed against the seek pulses. Therefore, when the final pulse "0" of the seek pulses is given, the head may be still in movement around the track having a track number of 3 or 2. In such a case, the acknowledge pulse, which indicates that the head has been returned to the track having the track number of zero, cannot be sent within several milliseconds (for example, 2 ms) after the final pulse "0" of the seek pulses is given.

The host computer requires disk apparatuses connected to a conventional FDD compatible interface, whether they are those using the step driving method or those using the linear-motor driving method, to be controlled in the same way. Therefore, if an acknowledge pulse is not sent back from a disk apparatus within in a predetermined period of time after the final pulse "0" of the seek pulses is given, as described above, it is deemed as an apparatus error.

Consequently, as shown in Fig. 4(b), a disk apparatus employing the linear-motor driving section needs to perform processing in which the acknowledge pulse is generated by software and sent back to the host computer irrespective of the actual head movement position, within the predetermined period of time (for example, 2 ms) after the final pulse "0" of the seek pulses is given from the host computer. With this processing, the host computer determines that the disk apparatus operates normally and the head has been returned to the track having a track number of zero. When seek pulses for moving the head, for example, to the track having a track number of 7 are given after that, even if the head has not yet been returned to the track having a track number of zero at that point of time, processing for moving the head by the distance from the current head position to the track having a track number of 7 needs to be performed.

When the acknowledge pulse, which indicates that the head has been returned to the track having a track number of zero, is generated by software in a disk apparatus, as shown in Fig. 4(b), however, if the track number of the current head position is erroneously counted in the disk apparatus, this error cannot be corrected unless the apparatus is reset.

If a head movement is erroneously counted in the head-position detection unit, which detects the head position on the disk, or if the head is moved by one track due to an external impact, for example, the track number counted in the disk apparatus may differ from the number of the track where the head is actually positioned.

In Fig. 4(d), numerals 10, 9, 8, ... in the upper row indicate the numbers of tracks where the head can be actually positioned, and numerals in parentheses (9), (8), (7), ... in the lower row indicate the numbers of tracks recognized by the disk apparatus.

When the track number is erroneously counted in the disk apparatus in this manner, if the host computer sends a seek pulse to move the head to the track having a track number of 9, for example, the head is actually moved to the track having a track number of 10. The host computer detects the ID of a reproduction signal sent from the head and determines that the current track differs from the target track, namely, an erroneous seek operation has been performed. In this case, the host computer attempts to return the head to the track having a track number of 0 to correct the erroneous track-number count.

In disk apparatuses where the head is moved step by step, since an acknowledge signal for reporting a zero-position return is issued when the head is positively returned to the track having a track number of zero, an erroneous track-number count can be corrected at that point of time. In the linear-motor driving method, however, the acknowledge pulse shown in Fig. 4(b) is sent to the host computer although the head is not positively returned to the track having a track number of zero. Therefore, a correction at a return to the origin cannot be performed actually, and the erroneous track-number count is used as is.

The present invention has been made to address the foregoing drawback. Accordingly, it is an object of at least preferred embodiments of the present invention to provide a head control unit for a disk apparatus where a head is driven by a linear motor, the head control unit allowing an erroneous track-number count to be immediately corrected when it happens.

European Patent Application Publication No. EP-A-0,657,877 discloses a head control unit according to the pre-characterising part of claim 1 hereof. In EP-A-0,657,877, the number of track crossings during a seek operation is compared with a predetermined reference value to generate confirmation data and the track-number count is corrected by using the confirmation data.

According to the present invention there is provided a head control unit in a disk apparatus having a rotation driving section for rotating a disk, a head facing a recording surface of the disk, a head feeding means for feeding the head in a direction in which the head traverses tracks on the disk, head-position detection means for generating a detection output changed according to the movement of the head, and a control section for controlling the head feeding means according to the detection output obtained by the head-position detecting means, wherein, when a seek pulse for moving the head to the target position is given, the control section drives the head feeding means to move the head to the target position and, when it is determined from the output of the head-position detection means that the head has been moved by one track, the control section changes a track-number count by one, characterised in that:
reference-position detection means is provided for generating an output changed when the head is moved to a reference position specified in advance;
when the reference-position detection means changes its output during the movement of the head, the control section determines whether the track-number count corresponds to the reference position; and
if the track-number count does not correspond to the reference position, the control section performs an operation for correcting the track number count correspondingly to the reference position.

The head control unit may be configured such that when the numbers of tracks on the disk are sequentially set from an initial position to 0, 1, 2, ..., the reference position is specified in an area having a track number of more than zero; a region including the reference position and having a width corresponding to one track pitch is specified; when the head is moved to the track having a track number of zero, which serves as the target position, if the output of the reference-position detection means changes within the region, the track-number count is not changed; if the head is positioned in a zone having a larger track number than the region when the output changes, the track-number count is decremented by 1; and if the head is positioned in a zone having a smaller track number than the region when the output changes, the track-number count is incremented by 1.

In at least preferred embodiments of the present invention, the head-position detection means is provided together with the reference-position detection means, and when the head passes the reference-position detection means, it is checked whether the track-number count is erroneous at this point of time. Therefore, even if the track-number count becomes erroneous due to a detection error of the head-position detection means or a positional shift of the head caused by an external impact, a track-number count error can be corrected by checking the output of the reference-position detection means.

In at least preferred embodiments of the present invention, control may be performed such that an output change of the reference-position detection means is checked only if the head is returned to the position of a track number of zero when an erroneous seek operation happens. Alternatively, control may be performed such that the reference position is specified at any point and the track-number count is corrected every time the head passes the reference position.

The present invention is especially effective for the head control unit in which, when a plurality of seek pulses required to move the head to the track having a track number of zero, serving as the target position, are given, the control section generates an acknowledge signal indicating that the head has been returned to the track having a track number of zero irrespective of the current head position and sends the acknowledge signal to the host computer within a predetermined period after the final pulse is given.

As described above, in at least preferred embodiments of the present invention, in disk apparatuses in which the head is moved by the use of a linear-motor driving section (VCM) in a seek operation, even if a count error occurs in the track counter, the count error can be corrected, for example, by returning the head to the track having a track number of zero. _{,} '

An embodiment of the invention will now be described, by way of example only, with reference to the accompanying drawings in which:
Fig. 1 is a block diagram of a head control unit according to an example embodiment of the present invention.
Figs. 2A and 23 show an example structure of a head-position detection unit and a reference-position detection unit. Fig. 2A is a side view of a linear scale, and Fig. 2B is a partial plan showing the relationship between an optical detector and the linear scale.
Fig. 3A is a view of the waveforms of the phase-A and phase-B detection outputs of the head-position detection unit, and Fig. 3B is a waveform view showing a switching point of the output of the reference-position detection unit.
Fig. 4(a) shows seek pulses, Fig. 4(b) shows an acknowledge pulse, Fig. 4(c) shows the movement positions of the heads, Fig. 4(d) shows track-number counts, Fig. 4(e) shows a reference-position detection pulse, and Fig. 4(f) shows a correction of track-number counts.
Fig. 5 is a flowchart of checking and correcting a track-number count.

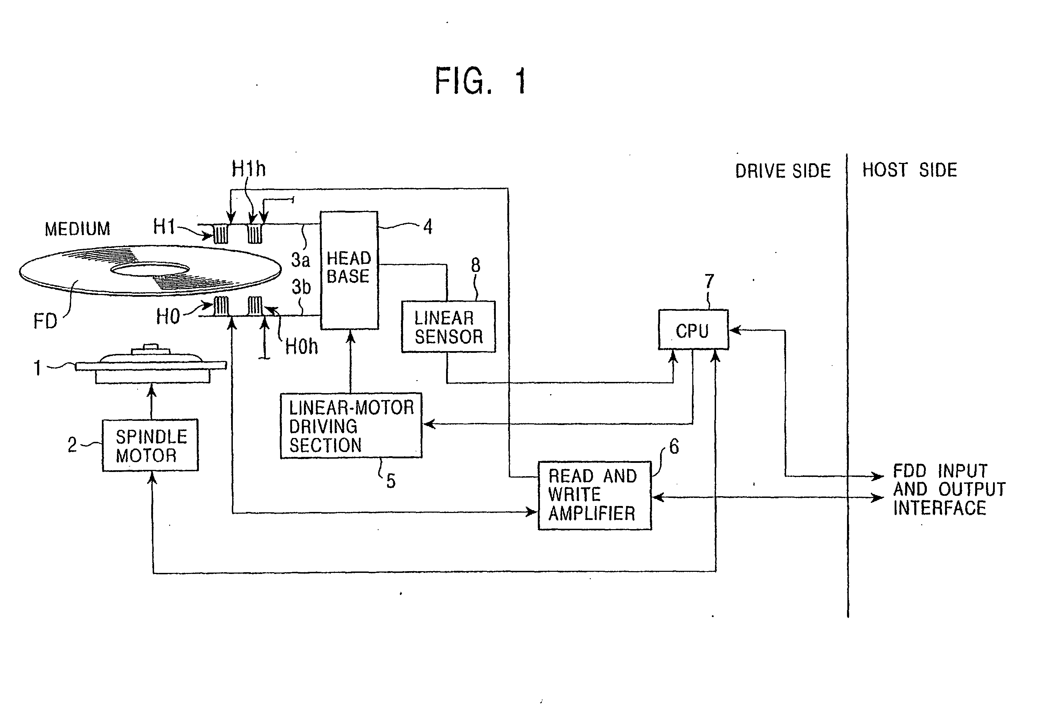

Fig. 1 is a block diagram of a disk apparatus according to an example embodiment of the present invention.

The disk apparatus can load a high-density-recording disk and a floppy disk (FD) having a capacity of 2 megabytes (MB) and conforming to the same standard as a conventional disk.

The disk apparatus includes a turntable on which the center section of each of the above disks is loaded, that is, a rotation driving section 1. The rotation driving section 1 is rotated by a spindle motor 2. When a floppy disk (FD) is loaded on the rotation driving section 1, a magnetic head H0 at a side 0 contacts one recording surface of the disk and a magnetic head H1 at a side 1 contacts the other recording surface.

The magnetic head H1 is supported by a support arm 3a, and the magnetic head H0 is supported by a support arm 3b. Both support arms 3a and 3b are supported by a head base 4. The head base 4 can be continuously fed in the radial direction of the disk D by a head feeding unit having a linear-motor driving section (voice-coil motor, VCM) 5.

The magnetic heads H0 and H1 are connected to an FDD input and output interface through a read and write amplifier 6. The host computer sends a control signal for controlling the floppy-disk drive to the input and output interface.

When data is recorded into or reproduced from the floppy disk (FD), the movement of the head base 4 is detected by a linear sensor 8 serving as both head-position detection unit and reference-position detection unit, and the detection output is sent to a CPU 7 serving as a control section. The CPU 7 controls the linear-motor driving section 5 and the spindle motor 2.

The support arms 3a and 3b also have other magnetic heads H0h and H1h used for a high-density-recording magnetic disk. When a high-density-recording disk is loaded on the rotation driving section 1, recording and reproduction are performed with the use of the magnetic heads H0h and H1h.

In the high-density-recording disk, a servo signal for tracking is recorded on a recording surface. The CPU 7 detects the servo signal according to the reproduction outputs of the magnetic heads H0h and H1h, controls the linear-motor driving section 5 by the use of this servo signal, and performs a head seek operation and on-track control. Therefore, when a high-density-recording disk is loaded, the output of the linear sensor 8 is not used for seek control. An input and output interface (not shown) used for recording and reproduction operations of a high-density-recording disk is provided separately from the FDD input and output interface shown in Fig. 1.

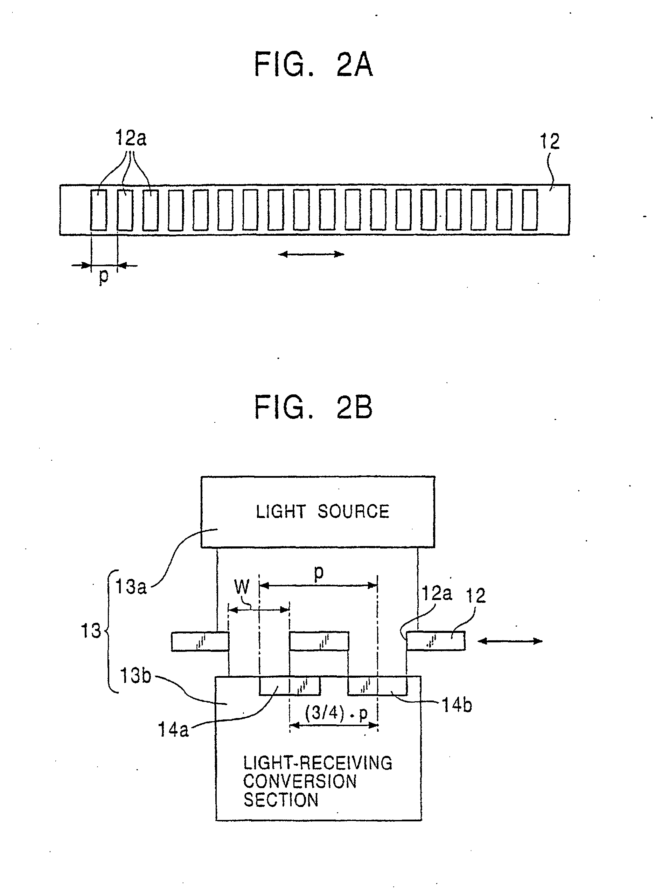

The linear sensor 8 includes a linear scale 12 as shown in Figs. 2A and 2B. The linear scale 12 has slits 12a at a constant interval. The slits 12a and an optical detector 13 facing the slits 12a form the head-position detection unit. The Linear scale 12 is also provided with a reference window 12b. This reference window 12b and an optical detector facing the window form the reference-position detection unit. Either the linear scale 12 or the optical detectors are secured to the head base 4, and the other is secured to a chassis.

The structure of the head-position detection unit will be first described. The optical detector 13 is formed of a light source 13a and a light-receiving conversion section 13b fixed opposite to each other with the linear scale 12 sandwiched therebetween. The light-receiving conversion section 13b is provided with a light-receiving device 14a and a light-receiving device 14b. The light-receiving device 14a and the light-receiving device 14b are disposed at a distance of 3p/4, where p indicates the interval of the slits 12a made in the linear scale 12.

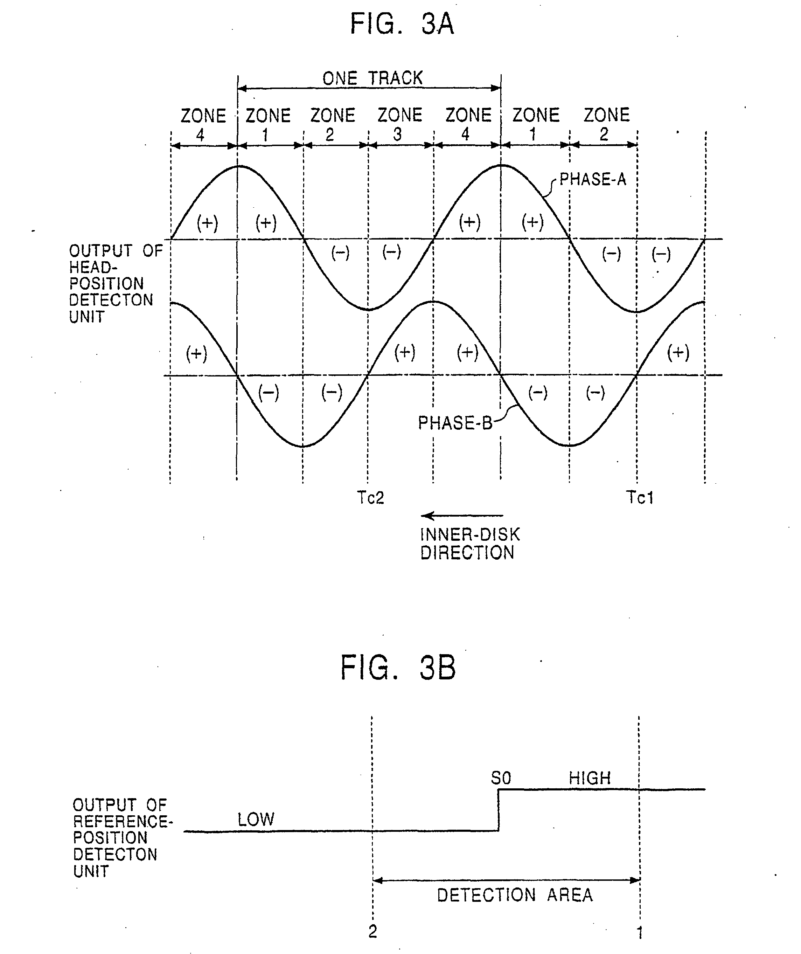

Light emitted from the light source 13a passes through the slits 12a formed in the linear scale 12 and is detected by the light-receiving devices 14a and 14b. Since the linear scale 12 and the optical detector 13 move relatively, phase-A and phase-B detection outputs having strengths which change like trigonometric functions or those approximating to trigonometric functions according to the amounts of received light are obtained from the light-receiving devices 14a and 14b. Due to the interval "p" of the slits 12a in the linear scale 12, the light-receiving output obtained from the Light-receiving device 14a and that obtained from the light-receiving device 14b have a phase difference of one-fourth the period (90 degrees). Fig. 3A shows the phase-A and phase-B detection outputs of the head-position detection unit.

In the reference-position detection unit, the light source is positioned at one side of the reference window of the linear scale 12 and a light-receiving device is positioned at the other side. When an edge of the reference window passes the position of the light-receiving device, the detection output of the reference-position detection unit changes from a low level to a high level.

When the disk apparatus is assembled, the relationship between the position of the linear sensor 8 and that of the head is finely adjusted. As a result, the head is positioned at a track center Tc in the disk when the phase-B detection output of the head-position detection unit equals zero. The period (360 degrees) of the phase-A and phase-B detection outputs corresponds to the width of one track (one track pitch, for example, 187.5 µm).

When the edge of the reference window passes the light-receiving device, the output of the reference-position detection unit is switched. This switching point (reference position S0) is specified at any point between the center Tc1 of the track having a track number of 1 and the center Tc2 of the track having a track number of 2. When the head is moved to a side (inner side of the disk) where the track number is larger than that of the reference position S0, the output of the reference-position detection output is switched to a low level. When the head is moved to a side (outer side of the disk} where the track number is smaller than that of the reference position S0, the output of the reference-position detection output is switched to a high level.

When a floppy disk (FD) is loaded into this disk apparatus, the host computer applies the same control as for a conventional floppy-disk drive apparatus, through an FDD input and output interface. In other words, in a seek control, the host computer sends seek pulses, one pulse for one track, to the CPU 7 of the disk apparatus. It is necessary for the disk apparatus to send an acknowledge pulse indicating a zero-position return to the host computer within a predetermined period of time (for example, 2 ms) after the host computer sends seek pulses for returning the head to the center of the track having a track number of zero to the disk apparatus.

A seek control operation to be performed when a floppy disk (FD) is loaded into the disk apparatus will be described below.

### (Updating a track number and detecting a head position)

The CPU (control section) 7 of the disk apparatus can determine from the phase-A and phase-B detection outputs of the head-position detection unit, shown in Fig. 3A, that the head is moved to another track, and can also calculate the distance (positional deviation) from the head to the target track.

The phase-B detection output has a center value (0-V point) at phases of 0 degrees, 180 degrees, 360 degrees, 540 degrees, 720 degrees, .... The mount position of the linear sensor 8 is adjusted such that the magnetic heads H0 and H1 match the center Tc of each track on the disk when the phase is equal to 360 degrees multiplied by N (N being an integer). The area within 180 degrees in both directions from the track center Tc corresponds to one track. When the head is positioned within one track, the track number is not updated. When the head is moved to an adjacent track, the CPU 7 increments or decrements a track counter to update the track number.

To update the track number and to detect the head position, a combination of the polarity of the phase-A detection output and that of the phase-B detection output is calculated in the present embodiment. From the calculated value, the zone in a track, where the heads are positioned is detected. According to the phase-B detection output, the distance (positional deviation) from the current head position in a track to the track center Tc of the track is detected.

Since the phase-A detection output and the phase-B detection output change like trigonometric functions or in manners similar to those, the polarity of each detection output changes in every 180 degrees (half the period). The phase-A and phase-B detection outputs have a phase difference of 90 degrees.

Therefore, the combination of the polarity of the phase-A detection output and that of the phase-B detection output changes in four ways in one track. When the polarity of the phase-B detection output is negative (-) and that of the phase-A detection output is positive (+), the corresponding zone in a track is called a zone 1, when both polarities of the phase-B and phase-A detection outputs are negative (-), the corresponding zone is called a zone 2, when the polarity of the phase-B detection output is positive (+) and that of the phase-A detection output is negative (-), the corresponding zone is called a zone 3, and when both polarities of the phase-B and phase-A detection outputs are positive (+), the corresponding zone is called a zone 4.

The CPU 7 calculates the combination of the polarities, determines that the magnetic heads have been moved to an adjacent track when the CPU 7 determines that the magnetic heads have been moved from the zone 4 to the zone 1, and the track counter is incremented by 1. When the CPU 7 determines that the magnetic heads have been moved from the zone 1 to the zone 4, the track counter is decremented by 1.

The positional deviation from the current head position to the center of the target track is obtained from the current track number indicated by the track counter and the distance between the track center and the head position in the track, calculated from the phase-B detection output.

### (Processing for returning the heads to the track having a track number of zero)

An operation for returning the heads to the center Tc of the track having a track number of zero is performed in the following cases. The operation is performed in initializing processing to be executed when the disk apparatus is started with a disk being loaded. Alternatively, the operation is performed in a case (re-zero processing) in which, while the heads are positioned at a target track in a seek operation, when a signal recorded on the track is read, an erroneous seek operation is detected, in which the track number recognized by the host computer differs from the track number obtained from the ID of the read signal. Furthermore, the operation is performed in a case in which a signal recorded in the track having a track number of zero is read.

Figs. 4(a) to 4(f) show a case in which, when the heads are positioned at the center of the track having a track number of 10, the host computer performs a control of returning the heads to the track having a track number of zero. In this case, the host computer sends 10 seek pulses, for example, at an interval of 3 ms to the CPU 7 of the disk apparatus, as shown in Fig. 4(a) by numerals, 9, 8, 7, 6, ..., and 0. When a seek pulse "9" is given, a drive instruction is sent to the linear-motor driving section 5 and the heads start being moved to the outer area of the disk.

The host computer checks whether the disk apparatus issues an acknowledge signal within a predetermined period of time after the final seek pulse "0" for returning the heads to the track having a track number of zero is given. Since the linear-motor driving section 5 has a low start speed for the heads and has a low tracking capability against seek pulses, the head movement across tracks is delayed against the timing of the seek pulses, as shown in Fig. 4(c). Therefore, the heads cannot be positioned at the center Tc of the track having a track number of zero within a predetermined period of time after the final seek pulse "0" is given. The CPU 7 generates the acknowledge pulse shown in Fig. 4(b) and sends it to the host computer within the predetermined period of time (for example, 2 ms) after the host computer sends the final seek pulse "0".

In other words, irrespective of whether the heads are positively returned to the track having a track number of zero, the acknowledge pulse is sent to the host computer as a dummy signal indicating that the heads have been returned to the track having a track number of zero. The host computer determines that the heads have been returned to the track having a track number of zero in the disk apparatus when it receives the acknowledge pulse. Immediately after that, the host computer may send a seek instruction for moving the heads to a target track. To move the heads to the track having a track number of seven, for example, seven seek pulses are sent to the disk apparatus immediately after the host computer receives the acknowledge pulse.

Even if the heads have actually not been returned to the center of the track having a track number of zero at this point of time, since the CPU 7 has determined the current head position from the phase-A and phase-B head-position detection outputs shown in Fig. 3A, when the movement distance from the current position to the center of the target track having a track number of seven is calculated and the heads are moved to the inner side of the disk, the heads can be positioned at the center of the target track.

### (Operation for checking a track number)

When the heads are returned to the track having a track number of zero, the CPU 7 checks or corrects the track number currently recognized by referring to the output of the reference-position detection unit, shown in Fig. 3B.

The output of the reference-position detection unit, shown in Fig. 3B, is obtained from the detection of the edge 12b1 of the reference window in the linear scale, shown in Fig. 2A. The position where the edge is detected is called the reference position S0. The reference position S0 is positioned at any point between the center Tc1 of the track having a track number of 1 and the center Tc2 of the track having a track number of 2. A region between the track centers Tc1 and Tc2, having a width of one track pitch, is called a detection region.

The disk apparatus always determines the current head position from the phase-A detection output and the phase-B detection output shown in Fig. 3A. As described above, when it is determined that the heads pass the boundary between the zone 4 and the zone 1, the track counter in the CPU 7 is updated. If the phase-A or phase-B detection output is erroneous, noise affects a circuit in the detection units, or the heads are moved just by one track due to an external impact, the number of the track where the heads are actually positioned may be shifted from the track-number count based on the head detection position calculated from the phase-A and phase-B detection outputs. Also due to an erroneous detection of a head movement from the zone 4 to the zone 1 or that of a head movement from the zone 1 to the zone 4, an erroneous track-number count may happen.

In such a case, the track-number count can be corrected by checking whether the heads are positioned within the detection region. More specifically, when the track-number count is correct, if the head position determined by the CPU 7 is more outer than the center Tc2 of the track having a track number of 2 and more inner than the center Tc1 of the track having a track number of 1 in the disk, the output of the reference-position detection unit is switched.

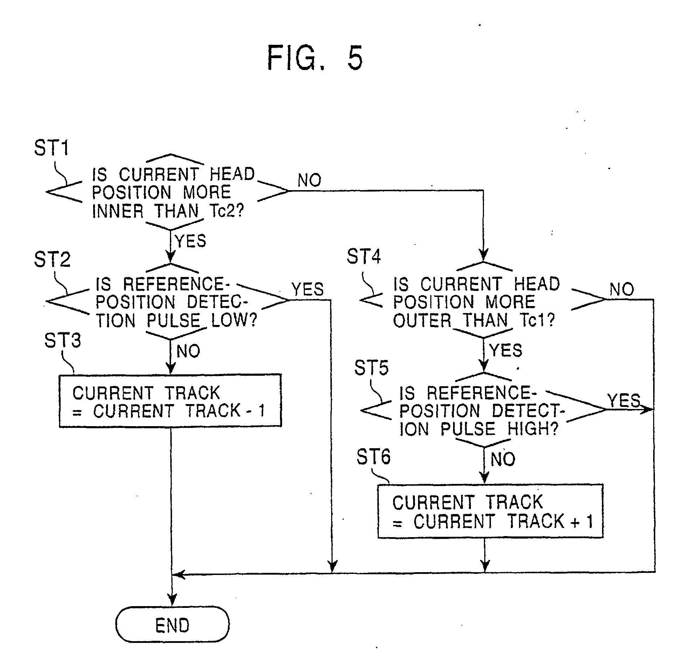

Fig. 5 is a flowchart of checking and correcting a track-number count of the track counter.

When the CPU 7 determines in a step 1 (ST 1) from calculation based on the outputs of the head-position detection unit, shown in Fig. 3A, that the heads are positioned more inner than the center Tc2 of the track having a track number of 2 in the disk, it is checked in a step 2 (ST 2) whether the reference-position detection pulse shown in Fig. 3B is low or high. If the reference-position detection pulse is low, it is determined that the track-number count of the track counter is correct. If the reference-position detection pulse is high in the step 2, it is determined that the track-number count of the track counter has an error and the count is decremented by 1 in a step 3 (ST 3).

When the CPU 7 determines in the step 1 that the heads are positioned more outer than the center Tc2 of the track having a track number of 2 in the disk, it is checked in a step 4 whether the heads are positioned more inner than the center Tc1 of the track having a track number of 1 in the disk. When it is determined that the head position is more inner, it is checked in a step 5 (ST 5) whether the reference-position detection pulse is low or high. If it is high, it is determined that the track-number count of the track counter is correct. If the reference-position detection pulse is low, the track-number count is incremented by 1.

As a result of this correction, even if the track-number counts of the track counter, (9), (8), (7), ..., are shifted from the track numbers corresponding to the actual head positions, 10, 9, 8, ..., as shown in Fig. 4(b), the count can be corrected as shown in Fig. 4(f).

In the correction processing shown in Fig. 5, the count of the track counter can be incremented or decremented just by 1. The count can be corrected if it is shifted in any side, positive or negative. If a count error occurs in the track counter due to the outputs of the head-position detection unit, since the error usually does not exceed 1, the correction processing shown in Fig. 5 can easily handle the error. In case the count of the track counter is shifted by 2, the correction operation shown in Fig. 5 needs to be executed twice to correct the count.

The detection region shown in Fig. 3(b) is not limited to that between the track centers Tc1 and Tc2. It can be another region. The correction processing may be applied only when the heads are returned to the track having a track number of zero. Alternatively, the correction processing may be executed every time the heads pass the detection region.

## Claims

1. A head control unit in a disk apparatus having a rotation driving section (1, 2) for rotating a disk, a head (H1) facing a recording surface of the disk, a head feeding means (5) for feeding the head in a direction in which the head traverses tracks on the disk, head-position detection means (8) for generating a detection output changed according to the movement of the head, and a control section (7) for controlling the head feeding means (5) according to the detection output obtained by the head-position detecting means (8), wherein, when a seek pulse for moving the head to the target position is given, the control section (7) drives the head feeding means (5) to move the head to the target position and, when it is determined from the output of the head-position detection means (8) that the head has been moved by one track, the control section (7) changes a track-number count by one, **characterised in that**:
reference-position detection means (8) is provided for generating an output changed when the head is moved to a reference position specified in advance;
when the reference-position detection means (8) changes its output during the movement of the head, the control section (7) determines whether the track-number count corresponds to the reference position; and
if the track-number count does not correspond to the reference position, the control section (7) performs an operation for correcting the track number count correspondingly to the reference position.

2. A head control unit according to Claim 1, wherein, when the numbers of tracks on the disk are sequentially set from an initial position to 0, 1, 2, ..., the reference position is specified in an area having a track number of more than zero; a region including the reference position and having a width corresponding to one track pitch is specified; when the head is moved to the track having a track number of zero, which serves as the target position, if the output of the reference-position detection means changes within the region, the track-number count is not changed; if the head is positioned in a zone having a larger track number than the region when the output changes, the track-number count is decremented by 1; and if the head is positioned in a zone having a smaller track number than the region when the output changes, the track-number count is incremented by 1.

3. A head control unit according to Claim 1, wherein, when a plurality of seek pulses required to movethehead(H1) to the track having a track number of zero, serving as the target position, are given, the control section (7) generates an acknowledge signal indicating that the head has been returned to the track having a track number of zero irrespective of the current head position and sends an acknowledge signal to a host computer within a predetermined period after the final pulse is given.

## Patentansprüche

1. Kopfsteuerungseinheit in einem Plattenlaufwerk, das einen Drehantriebsabschnitt (1, 2) zum Drehen einer Platte, einen einer Aufzeichnungsfläche der Platte zugekehrten Kopf (H1), eine Kopftransporteinrichtung (5) zum Transportieren des Kopfes in einer Richtung, in welcher der Kopf Spuren auf der Platte überquert, eine Kopfpositions-Detektionseinrichtung (8) zur Erzeugung eines entsprechend der Bewegung des Kopfes geänderten Detektionsausgangssignals und einen Steuerungsabschnitt (7) zur Steuerung der Kopftransporteinrichtung (5) entsprechend dem von der Kopfpositions-Detektionseinrichtung (8) erhaltenen Detektionsausgangssignals aufweist, wobei der Steuerungsabschnitt (7), wenn ein Suchimpuls zum Bewegen des Kopfes zu einer Zielposition gegeben ist, die Kopftransporteinrichtung (5) antreibt, um den Kopf zur Zielposition zu bewegen, und, wenn aus dem Ausgangssignal der Kopfpositions-Detektionseinrichtung (8) bestimmt wird, dass der Kopf um eine einzelne Spur bewegt worden ist, der Steuerungsabschnitt (7) eine Spurnummernzählung um eins erhöht, **dadurch gekennzeichnet, dass**
eine Referenzpositions-Detektionseinrichtung (8) zur Erzeugung eines Ausgangssignals, das geändert wird, wenn der Kopf zu einer im voraus spezifizierten Referenzposition bewegt wird, vorgesehen ist,
der Steuerungsabschnitt (7) bestimmt, ob die Spurnummernzählung mit der Referenzposition korrespondiert, wenn die Referenzpositions-Detektionseinrichtung (8) während der Bewegung des Kopfes ihr Ausgangssignal ändert, und
der Steuerungsabschnitt (7) eine Operation zum Korrigieren der Spurnummernzählung entsprechend der Referenzposition ausführt, wenn die Spurnummernzählung nicht mit der Referenzposition korrespondiert.

2. Kopfsteuerungseinheit nach Anspruch 1, wobei in dem Fall, dass die Nummern von Spuren auf der Platte von einer Anfangsposition sequenziell auf 0, 1, 2, ... eingestellt sind, die Referenzposition in einem Bereich mit einer Spurnummer größer als null spezifiziert ist, wobei ein Gebiet, das die Referenzposition enthält und eine mit einem einzelnen Spurabstand korrespondierende Breite aufweist, spezifiziert ist, wobei in dem Fall, dass der Kopf zu der als die Zielposition dienenden Spur mit der Spurnummer null bewegt wird, die Spurnummernzählung nicht geändert wird, wenn sich das Ausgangssignal der Referenzpositions-Detektionseinrichtung innerhalb der Region ändert, wobei die Spurnummernzählung um 1 dekrementiert wird, wenn bei sich änderndem Ausgangssignal der Kopf in einer Zone mit einer größeren Spurnummer als das Gebiet positioniert ist, und die Spurnummernzählung um 1 inkrementiert wird, wenn bei sich änderndem Ausgangssignal der Kopf in einer Zone mit einer kleinere Spurnummer als das Gebiet positioniert ist.

3. Kopfsteuerungseinheit nach Anspruch 1, wobei in dem Fall, dass mehrere zum Bewegen des Kopfes (H1) zu der als die Zielposition dienenden Spur mit der Spurnummer null erforderliche Suchimpulse gegeben sind, der Steuerungsabschnitt (7) ein Erkennungssignal, das ungeachtet der laufenden Kopfposition anzeigt, dass der Kopf zu der Spur mit der Spurnummer null zurückgebracht worden ist, erzeugt und, nachdem der letzte Impuls gegeben ist, innerhalb einer vorbestimmten Periode ein Erkennungssignal zu einem Hostcomputer sendet.

## Revendications

1. Unité de commande d'une tête dans un appareil à disque comportant une section d'entraînement en rotation (1, 2) pour faire tourner un disque, une tête (H1) tournée vers une surface d'enregistrement du disque, des moyens (5) d'avance de la tête pour faire avancer la tête dans une direction dans laquelle la tête franchit des pistes sur le disque, des moyens (8) de détection de la position de la tête servant à produire un signal de sortie de détection modifié conformément au déplacement de la tête et une section de commande (7) pour commander les moyens (5) d'avance de la tête conformément au signal de sortie de détection délivré par les moyens (8) de détection de la position de la tête, et dans laquelle, lorsqu'une impulsion de recherche pour déplacer la tête vers la position de consigne est délivrée, la section de commande (7) active les moyens (5) d'avance de la tête pour déplacer la tête jusqu'à la position de consigne et, lorsqu'il est établi à partir des moyens (8) de détection de la position de la tête, que la tête est déplacée d'une piste, la section de commande (7) modifie d'une unité le compte du nombre de pistes, **caractérisée en ce que**:
des moyens (8) de détection d'une position de référence sont prévus pour générer un signal de sortie modifié lorsque la tête se déplace jusque dans une position de référence spécifiée par avance;
lorsque le signal de sortie des moyens (8) de détection de la position de référence varie pendant le déplacement de la tête, la section de commande (7) détermine si le compte du nombre de pistes correspond à la position de référence; et
si le compte du nombre de pistes ne correspond pas à la position de référence, la section de commande (7) exécute une opération pour corriger le compte du nombre de pistes correspondant à la position de référence.

2. Unité de commande d'une tête selon la revendication 1, dans laquelle, lorsque les numéros des pistes sur le disque sont réglés séquentiellement depuis une position initiale sur 0, 1, 2, ..., la position de référence est spécifiée dans une zone possédant un numéro de piste supérieur à zéro, une référence incluant la position de référence et possédant une largeur correspondant à un pas des pistes est spécifiée, lorsque la tête est déplacée jusqu'à la piste possédant un numéro de piste égal à zéro, qui sert de position de consigne, si le signal de sortie des moyens de détection de position de référence varie dans la région, un compte du nombre de pistes n'est pas modifié; si la tête est positionnée dans une zone possédant un numéro de piste supérieur à la région lorsque le signal de sortie varie, le compte du nombre de pistes est décrémenté de 1, et si la tête est positionnée dans une zone possédant un numéro de piste inférieur à la région lorsque le signal de sortie varie, le compte du nombre de pistes est incrémenté de 1.

3. Unité de commande d'une tête selon la revendication 1, dans laquelle, lorsqu'une pluralité d'impulsions de recherche requises pour déplacer la tête (H1) jusqu'à la piste possédant un numéro de piste égal à zéro, qui sert de position de consigne, sont délivrées, la section de commande (7) produit un signal d'accusé de réception indiquant que la tête a été ramenée à la piste possédant le numéro de piste zéro indépendamment de la position actuelle de la tête, et envoie un signal d'accusé de réception à un ordinateur central, pendant une période prédéterminée après la délivrance de l'impulsion finale.
